# EUROPÄISCHE PATENTANMELDUNG

(11) **EP 0 773 403 A1**
(43) Veröffentlichungstag der Anmeldung: **14.05.1997**
(21) Anmeldenummer: 96810745.8
(22) Anmeldetag: 07.11.1996
(51) Int. Cl.: F22B 1/18, F01K 23/10, F16K 11/052

(54) **Kraftwerksanlage**

(30) Priorität: 10.11.1995 DE 19541889
(71) Anmelder: ASEA BROWN BOVERI AG, 5400 Baden (CH)
(72) Erfinder: Basler, Benno, 4802 Strengelbach (CH); Fetescu, Mircea, 5408 Ennetbaden (CH)
(74) Vertreter: Klein, Ernest

(57) **Zusammenfassung**

Bei einer Kraftwerksanlage werden die Abgase der Gasturbine (41) über einen Rauchgaskanal (1) und eine stromabwärts liegende Schieberanordnung wahlweise in einen Wärmetauscher oder in einen Abgaskamin (9) geleitet. Die Schieberanordnung besteht aus mindestens einer Rauchgasklappe (2) und die Drehachse (3) der Rauchgasklappe (2) ist im wesentlichen senkrecht zum Fundament (12) der Kraftwerksanlage angeordnet. Der Wärmetauscher kann beispielsweise ein Abhitzedampferzeuger (8) sein.

## Beschreibung

### Technisches Gebiet

Die Erfindung betrifft eine Kraftwerksanlage, bei der die Abgase der Gasturbine über einen Rauchgaskanal und eine stromabwärts liegende Schieberanordnung wahlweise in einen Wärmetauscher oder in einen Abgaskamin geleitet werden.

### Stand der Technik

Derartige Kraftwerksanlagen sind bekannt aus DE 43 19 732 A1. Bei der Schieberanordnung zweigt ein Zuführkanal (Bypasskanal) zum Abgaskamin ab. Der Abgaskamin wird dazu über dem Rauchgaskanal errichtet. Die Schieberanordnung besteht aus einer Anzahl von jalousieartig angeordneten Rauchgasklappen und mindestens einer Bypassklappe im Zuführkanal. Um das gleichzeitige Oeffnen und Schliessen der beiden Kanalquerschnitte zu ermöglichen, werden die Klappen mit einem gemeinsamen Antrieb betätigt. Die Drehachsen der Klappen liegen jeweils horizontal zum Fundament der Gasturbinenanlage.

Die Klappenanordnung ist dabei relativ kompliziert und benötigt einen aufwendigen Antrieb zum Betätigen der Klappen. Ein weiteres Problem stellt die ungenügende Abdichtung der Kanalquerschnitte durch diese Klappen dar, da sie die Tendenz haben, sich durch das Eigengewicht zu öffnen, wodurch Verluste an Abgasen entstehen. Dadurch wird nur ein geringer Wirkungsgrad der Kraftwerksanlage erreicht. Bei einer Revision des Wärmetauschers ist es zudem bei einem solchen Klappensystem nicht möglich, die Gasturbogruppe mittels des Abgaskamins alleine (engl. simple cycle) weiter zu betreiben, da durch die Klappen heisse Abgase in den Wärmetauscher eintreten. Dadurch wird ein Betreten des Wärmetauschers zum Zweck von Unterhaltsarbeiten beim Betrieb der Gasturbogruppe verunmöglicht. Soll die Gasturbine bei einer Revision des Wärmetauschers weiterbetrieben werden, ist es deshalb nötig, den Rauchgaskanal zusätzlich abzuschliessen, beispielsweise durch ange-schweisste Metallplatten oder einen guillotinähnlichen Ver-schluss. Erst dadurch wird es Personen ermöglicht, den Wärmetauscher für Unterhaltsarbeiten beim Betrieb der Gasturbogruppe zu betreten. Dies ist jedoch sehr aufwendig und kostenintensiv.

### Darstellung der Erfindung

Der Erfindung liegt die Aufgabe zugrunde, bei einer Kraftwerksanlage der eingangs genannten Art Abgasverluste an der Schieberanordnung zu vermeiden.

Erfindungsgemäss wird dies dadurch erreicht, dass die Schieberanordnung aus mindestens einer Rauchgasklappe besteht und dass die Drehachse der Rauchgasklappe im wesentlichen senkrecht zum Fundament der Kraftwerksanlage angeordnet ist

Die Vorteile der Erfindung sind unter anderem darin zu sehen, dass die Klappe durch den im Rauchgaskanal vorherrschenden Ueberdruck in der jeweiligen Position fixiert und dadurch abgedichtet wird. Der zur Drehung der Rauchgasklappe benötigte Antrieb wird durch die gewählte Anordnung wesentlich vereinfacht. Durch diese Vorteile steigt der Wirkungsgrad und die Verfügbarkeit der Kraftwerksanlage wesentlich.

Es ist besonders zweckmässig, wenn der Abgaskamin auf dem Fundament der Kraftwerksanlage angeordnet ist. Dies vereinfacht die Konstruktion, die Kosten, sowie den Unterhalt der Anlage. Der Abgaskamin wird vereinfacht, da keine Gestelle und ähnliches mehr benötigt werden. Zudem wird die gesamte Anlage kompakter, d. h. die Gesamtlänge der Gasturbogruppe mit Abgaskamin und Wärmetauscher wird verkürzt, indem der Abgaskamin neben dem Wärmetauscher angeordnet wird.

Weiter ist es zweckmässig, wenn in der Wand des Rauchgaskanales Ausbuchtungen zur Aufnahme der Rauchgasklappe angeordnet sind. Dadurch werden Strömungsverluste im Rauchgaskanal minimiert.

### Kurze Beschreibung der Zeichnung

In der Zeichnung ist ein Ausführungsbeispiel der Erfindung anhand einer Gasturbinenanlage dargestellt.

Es zeigen:
Fig. 1 eine schematische Darstellung einer Gasturbogruppe und eine Draufsicht auf eine Schieberanordnung mit einer Rauchgasklappe;
Fig. 2 das Detail II aus Fig.1;
Fig. 3 eine Draufsicht auf eine Schieberanordnung mit drei Rauchgasklappen;
Fig. 4 das Detail IV aus Fig.3;
Fig. 5 eine Draufsicht auf eine Schieberanordnung mit zwei Rauchgasklappen;
Fig. 6 das Detail VI aus Fig.5.

Es sind nur die für das Verständnis der Erfindung wesentlichen Elemente gezeigt. Nicht dargestellt sind von der Anlage beispielsweise die Ausgestaltung des Wärmetauschers.

### Weg zur Ausführung der Erfindung

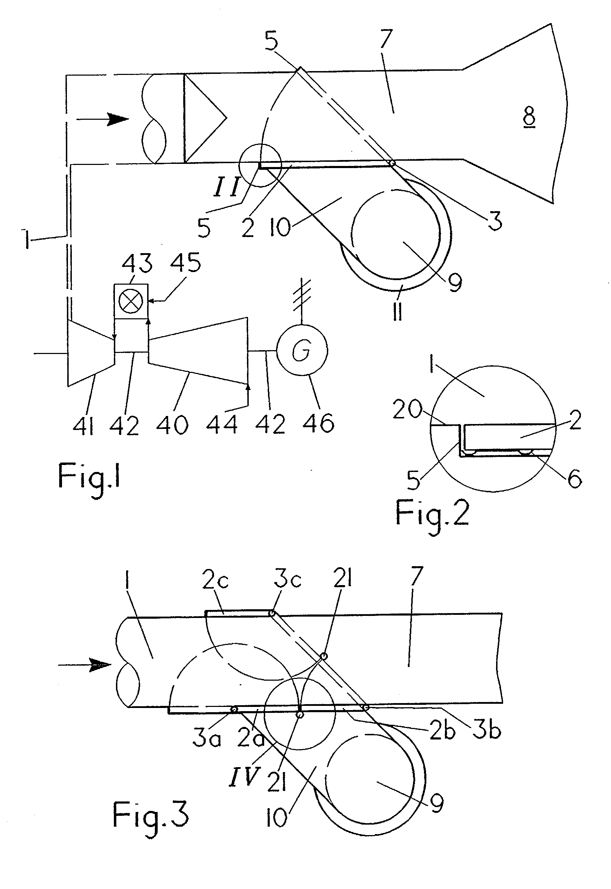

In Fig. 1 ist schematisch eine Gasturbogruppe dargestellt, im wesentlichen bestehend aus einem Verdichter 40, einer Gasturbine 41 und einem Generator 46, die über eine Welle 42 verbunden sind, sowie einer Brennkammer 43. Im Verdichter 40 wird Luft über eine Luftzuführung 44 angesaugt, komprimiert und die verdichtete Luft in die Brennkammer 43 geleitet. Dort wird der Verbrennungsluft Brennstoff 45 zugeführt und das Brennstoff-Luft-Gemisch verbrannt. Die entstandenen Rauchgase werden in die Gasturbine 41 eingeleitet, wo sie entspannt werden und ein Teil der Energie der Rauchgase in Drehenergie umgewandelt wird. Diese Drehenergie wird über die Welle 42 zum Antrieb des Generators 46 und des Verdichters 40 verwendet.

Die noch heissen Abgase werden über einen Rauchgaskanal 1 abgeführt. Dieser Rauchgaskanal 1 verzweigt sich bei einer Rauchgasklappe 2 in einen Zuführkanal 10 eines Abgaskamines 9 und in einen Zuführkanal 7 eines Wärmetauschers 8, beispielsweise eines Abhitzedampferzeugers. Zumindest im Bereich dieser Verzweigung werden die Querschnitte der Kanäle viereckig ausgeführt. Die Anordnung der Zuführkanäle 7, 10 erfolgt so, dass Strömungsverluste durch die Verzweigung so gering wie möglich gehalten werden. Der Abgaskamin 9 und der Wärmetauscher 8 sind im wesentlichen nebeneinander auf dem Fundament 12 der Anlage angeordnet. Der Abgaskamin 9 ist über eine Bodenplatte 11 auf dem Fundament 12 befestigt.

Wird als Wärmetauscher 8 ein Abhitzedampferzeuger verwendet, wird mittels der dem Abgas entzogenen Wärmeenergie Wasser verdampft. Nach Abgabe der Wärmeenergie wird das Abgas über einen nicht dargestellten, weiteren Kamin ins Freie geleitet. Der im Abhitzedampferzeuger 8 produzierte Dampf (oder auch heisses Wasser) wird einem Dampfverbraucher zugeführt, beispielsweise einer Dampfturbine. Wenn der Abgasstrom durch den Abgaskamin 9 geleitet wird, werden die Abgase ohne Rückgewinnung der Wärmeenergie direkt an die Umgebung abgegeben.

Die Rauchgasklappe 2 wird entsprechend dem Querschnitt des Kanäle ausgebildet, d.h. im wesentlichen viereckig. Die Rauchgasklappe 2 ist um eine senkrecht auf dem Fundament 12 stehende Achse 3 in zwei Positionen drehbar. Die Drehung erfolgt über die Achse 3 mittels eines nicht dargestellten Antriebes, der aussserhalb der Kanäle 1, 7, 10 angeordnet ist. Durch Umstellen der Rauchgasklappe 2 wird der durch den Rauchgaskanal 1 geführte Abgasstrom in den Zuführkanal 7 zum Wärmetauscher 8 oder in den Zuführkanal 10 zum Abgaskamin 9 geleitet. Durch den Ueberdruck des Abgasstromes im Rauchgaskanal 1 wird die Rauchgasklappe 2 in der jeweiligen Position fest angedrückt und damit abgedichtet. Abgasverluste an der Klappe 2 werden dadurch so minimiert, dass der Betrieb der Gasturbinenanlage auch bei einer Revision des Wärmetauschers gewährleistet bleibt.

Nach Fig.2 ist in der Wand 20 des Rauchgaskanales 1 eine Ausbuchtung 5 zur Aufnahme der Rauchgasklappe 2 angeordnet. Dadurch werden Strömungsverluste im Bereich der Klappe 2 minimiert. Zwischen der Rauchgaskanalwand 20 und der Klappe 2 ist ein Dichtungselement 6 angeordnet, welches die Abdichtung zusätzlich unterstützt. Das Dichtungselement 6 kann beispielsweise aus einem rostfreien Stahl hergestellt werden.

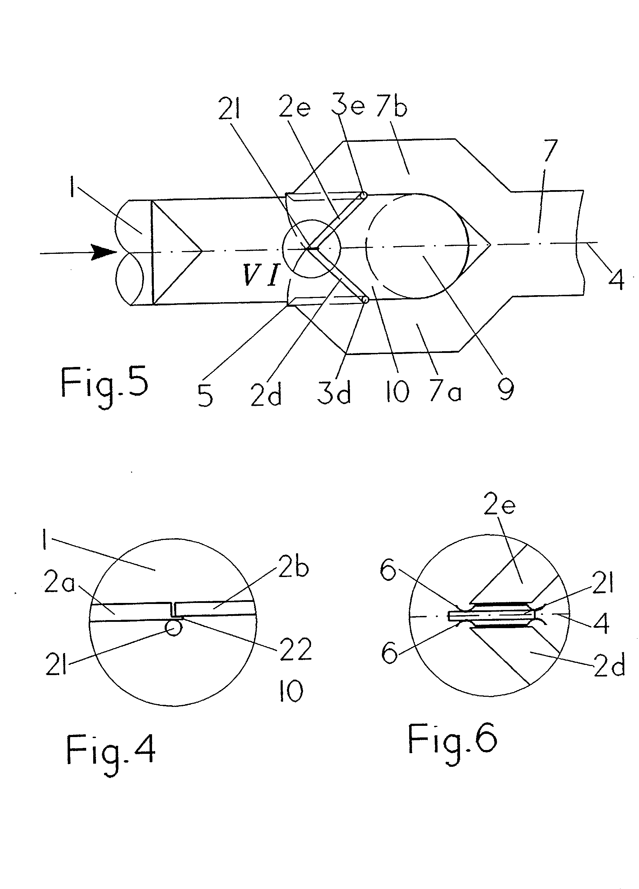

In Fig.3 besteht die Rauchgasklappe aus mehreren Teilklappen 2a, 2b und 2c mit zugehörigen Drehachsen 3a, 3b und 3c. Dies ist vorteilhaft bei grossen Kanalquerschnitten, um nicht zu grosse und schwere Klappen zu erhalten. Die Drehung der Klappen 2a, 2b, 2c erfolgt auch hier durch ausserhalb der Kanäle angeordnete Antriebe. Der Zuführkanal 10 wird dabei durch die Klappen 2a und 2b, der Zuführkanal 7 durch die Klappen 2b und 2c verschlossen. In der Mitte der Zuführkanäle ist eine Arretiervorrichtung 21 angeordnet, beispielsweise eine Stange.

Nach Fig.4 ist zur Abdichtung und zur Abstützung die Klappe 2a mit einer Lippe 22 ausgestattet. Die Lippe 22 kann natürlich auch als Metallstreifen, beispielsweise aus rostfreiem Stahl, auf der Klappe 2a befestigt werden. Dies hat den Vorteil, dass alle Klappen 2a, 2b, 2c identisch gefertigt werden können. Beim Schliessen des Zuführkanales 10 muss zuerst die Klappe 2a und dann erst die Klappe 2b gegen die Arretiervorrichtung 21 bewegt werden. Die Klappe 2c ist natürlich auch mit einer Lippe 22 ausgestattet und muss beim Verschliessen des Zuführkanals 7 ebenfalls zuerst geschlossen werden. Gegebenenfalls kann die Klappe 2b mit einer Lippe 22 ausgestattet werden, wobei dann an den Klappen 2a, 2c eine Lippe 22 nicht mehr nötig ist.

In Fig.5 ist der Abgaskamin 9 direkt hinter dem Rauchgaskanal 1 angeordnet. Der Abgasstrom zum Wärmetauscher wird deshalb in zwei Zuführkanälen 7a und 7b, die sich im Zuführkanal 7 wieder vereinigen, um den Kamin 9 herum geführt. Die gesamte Anordnung ist dabei symmetrisch bezüglich einer Symmetrieebene 4. Zum Schliessen der Zuführkanäle 7a und 7b werden zwei Klappen 2d und 2e mit zugehörigen Drehachsen 3d und 3e verwendet. Soll der Zuführkanal 10 zum Abgaskamin 9 verschlossen werden, stossen die den Drehachsen 3d, 3e entgegengesetzten Enden der Klappen 2d, 2e bei einer Arretiervorrichtung 21 aufeinander. Die Arretiervorrichtung ist dabei nicht unbedingt nötig, da die Enden der Klappen 2d und 2e auch direkt aufeinander positioniert werden können.

Nach Fig.6 sind zur Abdichtung auf der Arretiervorrichtung Dichtungselement 6 angeordnet. Durch den Druck des Abgasstromes auf die Klappen 2d, 2e werden diese gegen die Arretiervorrichtung gedrückt und die Abdichtung zusätzlich unterstützt.

Selbstverständlich ist die Erfindung nicht auf das gezeigte und beschriebene Ausführungsbeispiel beschränkt. Die Anzahl der Klappen ist an sich beleibig und muss den jeweiligen Verhältnissen angepasst werden. Die Lage der Zuführkanäle zum Abgaskamin und zum Wärmetauscher spielt dabei eine wesentliche Rolle, sowie die Kanalquerschnittsgrösse. Die Art der Dichtungselemente ist beliebig, sie können gegebenenfalls auch weggelassen werden.

### Bezugszeichenliste

- 1: Rauchgaskanal
- 2, 2a-2e: Rauchgasklappe
- 3, 3a-3e: Gelenk
- 4: Symmetrieebene
- 5: Ausbuchtung
- 6: Dichtungselement
- 7, 7a, 7b: Zuführkanal
- 8: Abhitzedampferzeuger
- 9: Abgaskamin
- 10: Zuführkanal
- 11: Bodenplatte
- 12: Fundament

- 20: Rauchgaskanalwand
- 21: Arretiervorrichtung
- 22: Dichtungslippe

- 40: Verdichter
- 41: Gasturbine
- 42: Welle
- 43: Brennkammer
- 44: Luftzuführung
- 45: Brennstoff
- 46: Generator

## Patentansprüche

1. Kraftwerksanlage, bei der die Abgase der Gasturbine (41) über einen Rauchgaskanal (1) und eine stromabwärts liegende Schieberanordnung wahlweise in einen Wärmetauscher oder in einen Abgaskamin (9) geleitet werden,
dadurch gekennzeichnet,
dass die Schieberanordnung aus mindestens einer Rauchgasklappe (2) besteht und dass die Drehachse (3) der Rauchgasklappe (2) im wesentlichen senkrecht zum Fundament (12) der Kraftwerksanlage angeordnet ist.

2. Kraftwerksanlage nach Anspruch 1,
dadurch gekennzeichnet,
dass der Wärmetauscher ein Abhitzedampferzeuger (8) ist.

3. Kraftwerksanlage nach Anspruch 1,
dadurch gekennzeichnet,
dass der Abgaskamin (9) auf dem Fundament (12) der Kraftwerksanlage angeordnet ist.

4. Kraftwerksanlage nach Anspruch 1,
dadurch gekennzeichnet,
dass in der Wand (20) des Rauchgaskanales (1) eine Ausbuchtung (5) zur Aufnahme der Rauchgasklappe (2) angeordnet ist.

5. Kraftwerksanlage nach Anspruch 1,
dadurch gekennzeichnet,
dass zwischen der Wand (20) des Rauchgaskanales (1) und der Rauchgasklappe (2) mindestens ein Dichtungselement (6) angeordnet ist.

6. Kraftwerksanlage nach Anspruch 1,
dadurch gekennzeichnet,
dass an der Rauchgasklappe (2) eine Dichtungslippe (22) angeordnet ist.
